# EUROPÄISCHE PATENTANMELDUNG

(11) **EP 0 844 585 A2**
(43) Veröffentlichungstag der Anmeldung: **27.05.1998**
(21) Anmeldenummer: 97111119.0
(22) Anmeldetag: 03.07.1997
(51) Int. Cl.: G06K 19/06

(54) **Elektronisch/optisch lesbare Karte für Blinde**

(30) Priorität: 20.11.1996 DE 19648032
(71) Anmelder: Deutsche Telekom AG, 53113 Bonn (DE)
(72) Erfinder: Pohen, Heinz-Jürgen, Dipl.-Ing., 50858 Köln (DE)

(57) **Zusammenfassung**

Die Erfindung ist auf eine elektronisch oder optisch lesbare Karte ausgerichtet, deren Verwendungszweck und deren Wert durch blinde bzw. sehgeschwächte Personen erkennbar ist.

Erfindungsgemäß wird auf der Oberfläche der Karte mindestens ein Erkennungszeichen angeordnet, welches eine Struktur aufweist, die sich von der übrigen Struktur der Kartenoberfläche unterscheidet. Das ertastbare Erkennungszeichen beinhaltet Angaben zum Verwendungszweck und/oder zum Kartenwert.

Die erfindungsgemäße Lösung läßt sich bei handelsüblichen elektronisch oder optisch lesbaren Karten, wie beispielsweise Telefonkarten, realisieren.

## Beschreibung

Die bekannten elektronisch oder optisch lesbaren Karten werden ohne ein spezielles für blinde bzw. stark sehbehinderte Personen lesbares Erkennungszeichen hergestellt und vertrieben. Der betroffene Personenkreis kann daher weder zwischen den einzelnen Karten unterscheiden noch feststellen, welchen Kartenwert die Karte besitzt. Letzteres ist insbesondere bei Telefonkarten von Nachteil.

Ziel der Erfindung ist eine eindeutige Zuordnung von elektronisch oder optisch lesbare Karten durch blinde bzw. sehgeschwächte Personen, sowohl für den Verwendungszweck als auch für konkrete Inhalte der Karte, wie beispielsweise den Kartenwert.

Erfindungsgemäß wird auf der Oberfläche der elektronisch bzw. optisch lesbaren Karte mindestens ein Erkennungszeichen angeordnet, welches eine Struktur aufweist, die sich von der übrigen Struktur der Kartenoberfläche unterscheidet und somit ertastbar ist. Eine solche Struktur kann beispielsweise aus Erhöhungen, oder Vertiefungen, die auf der Kartenoberfläche angeordnet
sind, bestehen. Durch Zuordnung von konkreten Inhalten zu den einzelnen sich unterscheidenden Strukturmustern ist vor dem Handling eine eindeutige Identifizierung der Karte möglich.

Eine derart ausgebildete elektronisch bzw. optisch lesbare Karte ermöglicht es blinden bzw. stark sehbehinderten Personen zwischen unterschiedlichen Karten für verschiedene Anwendungen, die sich in Größe und Form ähneln, zu unterscheiden.

Die erfindungsgemäße Lösung wird anhand von Ausführungsbeispielen näher erläutert.

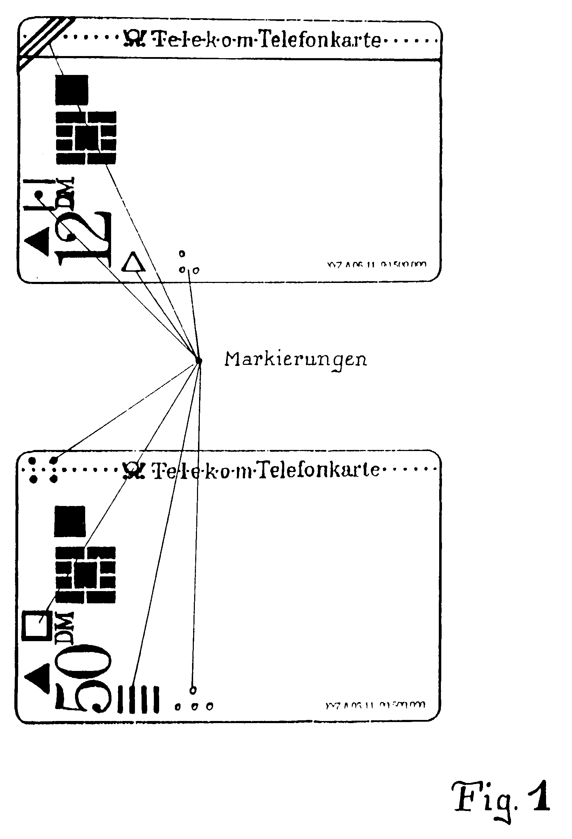

Fig. 1 zeigt mögliche alternative Ausgestaltungsformen von ertastbaren Erkennungszeichen insbesondere für den Kartenwert von Telefonkarten.

Im konkreten Anwendungsfall wird das Erkennungszeichen für den Kartenwert aus fühlbaren Erhöhungen in Form von erhabenen Farbpunkten gebildet, die an einer geeigneten Stelle auf der Kartenoberfläche aufgebracht sind.

Jeder Telefonkarte wird, entsprechend ihrem Wert, eine unterschiedliche Anzahl von Farbpunkten zugeordnet.

Beispielsweise kann ein Erkennungszeichen für den Wert der Telefonkarte nach folgendem Schema ausgebildet sein:
- 3,-DM-Telefonkarte: 1 erhabener Farbpunkt
- 6,-DM-Telefonkarte: 2 erhabene Farbpunkte (in Reihe)
- 12,-DM-Telefonkarte: 3 erhabene Farbpunkte (als Dreieck angeordnet)
- 50,-DM-Telefonkarte: 4 erhabene Farbpunkte (als Viereck angeordnet)

In Fig. 1 ist jeweils eine Karte mit einem Kartenwert von 12,- DM und eine Karte mit einem Kartenwert von 50,- DM abgebildet. Auf den Karten sind alternativ jeweils vier Beispiele für die mögliche Kennzeichnung des Kartenwertes dargestellt.

Das Erkennungszeichen für den Kartenwert kann auch aus fühlbaren geometrische Zeichen bestehen, die auf die Oberfläche der Telefonkarte aufgebracht werden. Auch hierbei ist jeder Telefonkarte, entsprechend ihrem Wert, ein eigenes unverwechselbares geometrisches Zeichen zugeordnet. Denkbare geometrische Zeichen können aus Strichen, Kreisen, Dreiecken oder aus der Kombinationen dieser oder ähnlicher Zeichen bestehen.
Eine weitere Möglichkeit wird darin gesehen, den Kartenwert durch in geometrischer Form angeordnete erhabene Farbpunkte zu kennzeichnen. Der Wert der Telefonkarte wird dabei durch die Anzahl der Farbpunkte und durch die geometrische Form, die aus der Anordnung der Farbpunkte zueinander gebildet wird, festgelegt.

Die Gestaltung der Markierungen kann nach Art und Ausführung verschieden sein. Die eigentliche Kartenoptik muß nur in sehr geringem Umfang geändert werden. Eine Veränderung bzw. Anpassung der Werbe-/Informations-Aufdrucke ist nicht notwendig.

## Patentansprüche

1. Elektronisch/optisch lesbare Karte für blinde bzw. stark sehbehinderte Personen, **dadurch gekennzeichnet,** daß auf der Oberfläche der elektronisch/optisch lesbaren Karte mindestens ein Erkennungszeichen angeordnet ist, welches eine von der Oberflächenstruktur der Telefonkarte abweichende Struktur besitzt und welches durch Ertasten in seiner Struktur erfaßbar ist.

2. Elektronisch/optisch lesbare Karte nach Anspruch 1, dadurch gekennzeichnet, daß das Erkennungszeichen die Form eines unverwechselbaren geometrischen Zeichens aufweist.

3. Elektronisch/optisch lesbare Karte nach Anspruch 1, dadurch gekennzeichnet, daß das Erkennungszeichen aus mindestens zwei geometrische Einzelzeichen besteht, deren Anordnung zueinander ebenfalls geometrischen Prinzipien entspricht.

4. Elektronisch/optisch lesbare Karte nach Anspruch 1, dadurch gekennzeichnet, daß das Erkennungszeichen aus mindestens einem geometrischen Zeichen besteht, welches in Form einer Erhöhung auf die Oberfläche der Karte aufgebracht ist.

5. Elektronisch/optisch lesbare Karte nach Anspruch 1, dadurch gekennzeichnet, daß das Erkennungszeichen aus mindestens einem geometrischen Zeichen besteht, welches in Form einer Vertiefung in die Oberfläche der Karte eingebracht ist.

6. Elektronisch/optisch lesbare Karte nach Anspruch 1, dadurch gekennzeichnet, daß das Erkennungszeichen aus mindestens einem erhaben auf die Oberfläche der Karte aufgebrachten Farbpunkt besteht.

7. Elektronisch/optisch lesbare Karte nach Anspruch 1, dadurch gekennzeichnet, daß das Erkennungszeichen als Information den konkreten Kartenwert beinhaltet.

8. Elektronisch/optisch lesbare Karte nach Anspruch 1, dadurch gekennzeichnet, daß das Erkennungszeichen als Information den konkreten Verwendungszweck der Karte beinhaltet.
